# EUROPÄISCHE PATENTSCHRIFT

(11) **EP 3 250 490 B1**
(45) Veröffentlichungstag und Bekanntmachung des Hinweises auf die Patenterteilung: **22.04.2020**
(21) Anmeldenummer: 16702909.9
(22) Anmeldetag: 29.01.2016
(51) Int. Cl.: B65G 54/00, B06B 3/00, G10K 15/00

(54) **AKUSTISCHE VEREINZELUNGSVERFAHREN**
ACOUSTIC SEPARATING METHOD
MÉTHODE DE SÉPARATION ACOUSTIQUE

(30) Priorität: 30.01.2015 DE 102015201683
(43) Veröffentlichungstag der Anmeldung: 06.12.2017
(73) Patentinhaber: ZBV-Automation GmbH, 53842 Troisdorf (DE)
(72) Erfinder: BERSE, Michael, 53577 Neustadt (Wied) (DE); TIMMER, Guido, 45529 Hattingen/Niederwenigern (DE); SCHIEFER, Patrick, 53773 Hennef (DE)
(74) Vertreter: dompatent von Kreisler Selting Werner - Partnerschaft von Patent- und Rechtsanwälten mbB
(86) Internationale Anmeldenummer: PCT/EP2016/051901
(87) Internationale Veröffentlichungsnummer: WO 2016/120439

(56) Entgegenhaltungen:
- WO-A1-2005/047148
- WO-A1-2010/089290
- WO-A1-2010/131509
- CN-A- 105 151 780
- DE-A1-102008 057 389
- DE-U1-202014 102 070
- JP-A- H07 137 824
- US-A- 2 400 261
- US-A- 4 402 221
- US-A1- 2002 088 693
- US-B2- 9 440 263

## Beschreibung

Die Erfindung betrifft ein Verfahren zur Vereinzelung loser Teile in einem Fertigungsprozess.

Bei dem Fertigungsprozess kann es sich um einen automatisierten Fertigungsprozess, um einen teilautomatisierten Fertigungsprozess oder um einen Fertigungsprozess an einem Handarbeitsplatz handeln. In automatisierten Fertigungsprozessen sind als Schüttgut vorliegende lose Bauteile zunächst zu vereinzeln, bevor sie von einem Roboter einzeln ergriffen werden und dem nachfolgenden Fertigungsprozess automatisch zugeführt werden. Es ist bekannt, lose Teile auf einer Unterlage dadurch zu vereinzeln, dass die Unterlage mechanisch in Bewegung oder Vibration versetzt wird. Dies kann dadurch erfolgen, dass die gesamte Unterlage mechanisch bewegt wird oder Stößel von unten gegen die Unterlage stoßen. Die auf der Unterlage aufliegenden Teile werden dabei in Bewegung versetzt, wobei übereinander liegende Teile getrennt werden und der Abstand zwischen benachbarten Teilen vergrößert wird. Mit Kamerasystemen und automatischen Objekterkennungsalgorithmen ist es dann möglich, einzelne Teile zu erkennen und deren Koordinaten an den Roboterarm zu übermitteln, um die Teile zu ergreifen.

Bei den bekannten Verfahren müssen zum Teil große mechanische Kräfte aufgebracht werden, um die Platte mit den zu vereinzelnden Teilen in Bewegung zu versetzen. Die mechanischen Kräfte und die mechanische Kraftübertragung bewirken einen Verschleiß der betroffenen Komponenten. Ein weiterer Nachteil besteht darin, dass herkömmliche Vereinzelungsvorrichtungen nur Teile einer bestimmten Größe und/oder Form in ausreichender Weise vereinzeln können. Für Teile anderer Größe und/oder Form sind jeweils andere Vereinzelungsvorrichtungen erforderlich.

DE 20 2014 102070 U1 offenbart ein Verfahren zur Vereinzelung von Teilen in einem Fertigungsprozess, wobei die Teile auf einer von einer Unterlage gebildeten Vereinzelungsfläche liegen und eine mechanisch von der Unterlage entkoppelten elektromagnetischen Aktor zur Erzeugung von Schwingungen vorgesehen ist, wobei die Teile dadurch bewegt werden, dass eine von dem erlektromagnetischen Aktor erzeugten Schwingungen zumindest einen Teil der Vereinzelungsfläche zu einer Bewegung anregt.

US 2,400,261 A offenbart ein Spielgerät, bei dem auf einer flexiblen, schräg angeordneten Unterlage befindliche Spielgeräte durch einen unterhalb der Unterlage angeordneten Lautsprecher zu einer Bewegung angeregt werden.

DE 10 2008 057 389 A1 beschreibt ein Transportieren von Spielfiguren über ein Spielbrett unter Verwendung von Luftkissen, Magnetfeldern oder elektrostatischer Aufladung.

Der Erfindung liegt die Aufgabe zugrunde, eine vereinfachte, verbesserte und in Bezug auf Größe, Gewicht oder Form der zu vereinzelnden Teile flexiblere Teilevereinzelung zu ermöglichen.

Das erfindungsgemäße Verfahren ist definiert durch Anspruch 1.

Eine Unterlage bildet die Vereinzelungsfläche für die zu vereinzelnden Teile. Die zu vereinzelnden Teile werden als Schüttgut auf die Unterlage gebracht. Es kann sich bei den Teilen um lose, das heißt nicht fest miteinander verbundene Teile handeln. Die Teile können auch miteinander verhakt sein (zum Beispiel Spiralfedern). Eine Schallerzeugungsvorrichtung ist zur Erzeugung von Schallwellen vorgesehen und mechanisch von der Vereinzelungsfläche und von der Unterlage entkoppelt. Das bedeutet, dass keine direkte mechanische Verbindung zwischen der Schallerzeugungsvorrichtung und der Unterlage besteht, sondern allenfalls eine indirekte mechanische Kopplung über einen Rahmen. Mechanisch entkoppelt bedeutet, dass sich zumindest ein Teil der Vereinzelungsfläche gegenüber der Schallerzeugungsvorrichtung bewegen kann. Aufgrund der fehlenden direkten mechanischen Verbindung zwischen der Schallerzeugungsvorrichtung und der Vereinzelungsfläche erfolgt die Schallübertragung von der Schallerzeugungsvorrichtung zu der Unterlage vorwiegend über Schallausbreitung im freien Raum und nicht über eine direkte mechanische Verbindung. Wichtig ist, dass zwischen der Schallerzeugungsvorrichtung und der zu bewegenden Unterlage ein Schallübertragungsmedium, zum Beispiel Luft oder eine Flüssigkeit (Wasser) angeordnet ist, die eine Schallübertragung durch den freien Raum ermöglicht.

Die Schallerzeugungsvorrichtung kann mit einer Schallmembran zur Erzeugung der Schallwellen versehen sein, wobei die Schallmembran von der Vereinzelungsfläche und von der Unterlage entkoppelt ist. Eine Bewegung der Schallmembran wird also nicht durch mechanische Kraftübertragung auf die Unterlage übertragen, sondern vielmehr ausschließlich durch Schallwellen.

Die Schallwellen werden von der Schallerzeugungsvorrichtung erzeugt und in Richtung auf die Unterlage derart ausgesendet, dass die Schallwellen die Unterlage zu einer Bewegung anregen, die ausreicht, um die Teile auf der Unterlage zu bewegen oder springen zu lassen. Die Unterlage wird von den Schallwellen derart bewegt, dass die darauf liegenden Teile zu einer derartigen Bewegung angeregt werden, die die Teile vereinzelt, sortiert, in der Lage orientiert und/oder entwirrt, so dass die Teile anschließend gegriffen und/oder inspiziert werden können.

Die Schallwellen können kontinuierlich oder als Schallimpulse ausgesendet werden. Die Länge der Schallwellen ist vorzugsweise variabel einstellbar. In entsprechender Weise sind vorzugsweise auch die Frequenz und/oder die Amplitude der Schallwellen variabel einstellbar. Dadurch ist es möglich, eine an Größe, Form und/oder Gewicht der zu vereinzelnden Teile angepasste Bewegung der Unterlage zu erzeugen. Dadurch können Teile verschiedener Größe und/oder verschiedenen Gewichts flexibel vereinzelt, entwirrt und/oder in eine Vorzugslage gebracht werden.

Die Unterlage kann als flexible Scheibe (Folie) oder als Förderband ausgebildet sein. Im Randbereich kann die flexible Unterlage fest mit einem die Unterlage tragenden Rahmen verbunden sein. Die Verbindung zwischen Unterlage und Rahmen kann lösbar ausgebildet sein. Beispielsweise kann die Unterlage in deren Randbereich fest eingespannt sein. Entscheidend ist, dass die Unterlage durch eine Schallwelle in Bewegung versetzt wird und nicht durch den die Unterlage tragenden Rahmen.

Alternativ kann die Unterlage als weitgehend starre Platte ausgebildet sein. Mit starr ist dabei gemeint, dass die Flexibilität der Platte geringer ist als diejenige einer flexiblen Scheibe oder Folie. Um zu verhindern, dass eine Vibration oder Bewegung der Unterlage sich auf den die Unterlage tragenden Rahmen überträgt, sollte die Platte nicht fest mit dem Rahmen verbunden sein, sondern relativ zu dem Rahmen frei bewegbar sein. Der Rahmen kann mit einer zum Beispiel umlaufenden, flexiblen Auflage für die Platte versehen sein. Die Platte kann an dem Rahmen in einer Führung gehalten sein, die die Platte in horizontaler Richtung seitlich begrenzt und eine vertikale Auf- und Abbewegung der Platte gegenüber dem Rahmen ermöglicht.

Die Schallmembran sollte unterhalb der Unterlage angeordnet sein, wobei die Schallwellen von der Schallmembran mit zumindest einer vertikal von unten nach oben in Richtung auf die Unterlage gerichteten Richtungskomponente ausgesendet werden. Der Schallübertragungsweg zwischen Schallmembran und der Unterlage sollte veränderbar sein. Je kürzer der Schallübertragungsweg ist, desto größer ist die Auswirkung der Schallwellen auf die Unterlage. Je länger der Schallübertragungsweg ist, desto geringer ist der Einfluss der Schallwellen auf eine Magnetisierung der Teile. Hierzu kann die Schallerzeugungsvorrichtung oder die Schallmembran höhenverstellbar, zum Beispiel an einem Schlitten, ausgebildet sein.

Alternativ kann die Vereinzelungsvorrichtung als Einzelsystem mit nur einer Unterlage ausgebildet sein, die nicht verfahrbar ist. Das Beladen der Unterlage, das Vereinzeln der Teile auf der Unterlage und/oder das Entnehmen der vereinzelten Teile kann dabei zeitlich nacheinander erfolgen.

Der Rahmen kann unterhalb der Unterlage eine nach unten abstehende, umlaufende Wand aufweisen, um die Schallwellen im Bereich der Unterlage zu verstärken. Die umlaufende Wand kann zusammen mit der Unterlage beispielsweise einen Resonanzkörper bilden.

Alternativ können mindestens zwei Unterlagen von einer Vereinzelungsposition oberhalb der Schallmembran in eine Entladeposition transportierbar angeordnet sein. Der Transport der Unterlagen kann dadurch erfolgen, dass die Unterlagen nach Art eines Karussells auf einer Kreisbahn um einen Mittelpunkt rotieren oder auf separaten verfahrbaren Schlitten angeordnet sind.

Bei einem Ausführungsbeispiel sind mehrere Unterlagen jeweils auf einem Schlitten seitlich verfahrbar angeordnet. Der Schlitten ist dazu ausgebildet, die betreffende Unterlage von einer Beladeposition in eine Vereinzelungsposition oberhalb der Schallmembran zu verfahren. In der Beladeposition wird der jeweilige Schlitten mit zu vereinzelnden Teilen beladen oder es werden vereinzelte Teile von der jeweiligen Unterlage entnommen. In der Vereinzelungsposition ist die betreffende Unterlage oberhalb der Schallmembran derart angeordnet, dass die ausgesendeten Schallwellen zu einer Vereinzelung der Teile führen.

In einem besonders bevorzugten Ausführungsbeispiel sind zwei Schlitten mit jeweils einer Unterlage vorgesehen, wobei die Schlitten alternierend von der Vereinzelungsposition in die Entladeposition verfahren werden. Das bedeutet, dass ein Schlitten automatisch in die Vereinzelungsposition verfahren wird, wenn der andere Schlitten in die Entladeposition bewegt wird. In Kombination mit einer höhenverfahrbaren Schallmembran ergibt sich der Vorteil, dass die Schallmembran an den jeweiligen Schlitten in der Vereinzelungsposition angenähert werden kann und von dem Schlitten entfernt werden kann, um ein Wechseln der Schlitten zu ermöglichen. Daraus resultiert als Hauptvorteil, dass auf der einen Unterlage zugleich eine Befüllung mit Teilen und eine Vereinzelung der Teile auf der Unterlage erfolgen kann, während zeitgleich auf der anderen Unterlage in der Entladeposition vereinzelte Teile entnommen werden können.

Vorzugsweise ist eine Blasvorrichtung vorgesehen und dazu ausgebildet, Gasdruckstöße in mindestens einem Randbereich der Unterlage in der Vereinzelungsposition zu erzeugen, um Teile aus dem Wandbereich der Unterlage in Richtung der Mitte der Vereinzelungsfläche zu bewegen. Als Mitte kann hierbei der Schwerpunkt der betreffenden Unterlage angesehen werden. Dadurch ist ein berührungsloses Vereinzeln und Sortieren der Teile möglich. Mechanischer Verschleiß der beteiligten Komponenten und der zu vereinzelnden Teile ist reduziert. Vorteilhafterweise ist die Blasvorrichtung dazu ausgebildet, zeitgleich vollständig um die Unterlage herum umlaufend Gasdruckstöße in Richtung des Mittelpunkts der Vereinzelungsfläche zu erzeugen. Die Blasvorrichtung kann auch dazu ausgebildet sein, einen kontinuierlichen Gas- bzw. Luftstrom zu erzeugen.

Nach dem Vereinzeln der Teile können diese von einem kameragestützten Robotersystem auf herkömmliche Weise ergriffen und dem nachfolgenden Fertigungsprozess zugeführt werden.

Bei einer Variante ist die Unterlage mit Aufnahmen für die zu vereinzelnden Teile versehen. Beim Vereinzeln der Teile können diese in die Aufnahmen bewegt werden, um deren Lage zu fixieren. Die Aufnahmen können dabei eine komplementäre Form zu den Teilen aufweisen, um einen sicheren Halt zu ermöglichen. Die Aufnahmen können in gleichmäßigen Abständen über die Vereinzelungsfläche verteilt auf der Unterlage angeordnet sein. Bei dieser Variante werden die Teile durch Bewegen der Unterlage jeweils in eine Aufnahme hinein vereinzelt. Das bedeutet, dass die Vereinzelung dadurch erfolgt, dass jeweils ein Teil durch Bewegen der Unterlage in eine Aufnahme hinein bewegt wird. Die Entnahme der Teile kann dabei ohne eine Robotik erfolgen, die zunächst die Position der Teile zum Beispiel mit einem optischen Kamerasystem erfassen muss. Vielmehr sind die Positionen der Aufnahmen bekannt, sodass eine Entnahme der Teile aus den Aufnahmen einfach durch Abgreifen jeder Aufnahme erfolgen kann. Das Entnehmen der Teile kann zum Beispiel von unten, das heißt von unterhalb der Unterlage, erfolgen. Die Teile werden dabei nach unten aus der Aufnahme herausgenommen oder fallen durch die Aufnahme hindurch.

Ein entscheidender Vorteil der Erfindung besteht darin, dass die Vereinzelungsfläche nicht durch mechanische Kraftübertragung, sondern durch Schallübertragung berührungsfrei bewegt wird und dadurch der Verschleiß der beteiligten Komponenten reduziert ist. Durch Verstellen der Frequenz und/oder der Amplitude des Schallerzeugers kann die Bewegung der Unterlage an verschiedenartige Bauteile angepasst werden. Vorzugsweise wird eine resonante Schwingung erzeugt. Das Bewegen der Vereinzelungsfläche durch Schallübertragung kann zum Entnehmen der Teile unterbrochen werden. Die Unterlage wird also zur Vereinzelung der Teile von den Schallwellen bewegt, während die Bewegung der Unterlage durch Schallübertragung zur Entnahme der Teile gestoppt werden kann.

Im Folgenden werden anhand der Figuren Ausführungsbeispiele der Erfindung näher erläutert. Es zeigen:
- Figur 1: einen schematischen Schnitt durch ein erstes Ausführungsbeispiel,
- Figur 2: eine Draufsicht aus Richtung des Pfeils II in Figur 1 in einer ersten Arbeitsposition,
- Figur 3: die Draufsicht gemäß Figur 2 in einer zweiten Arbeitsposition,
- Figur 4: die Draufsicht gemäß Figur 2 in einer dritten Arbeitsposition,

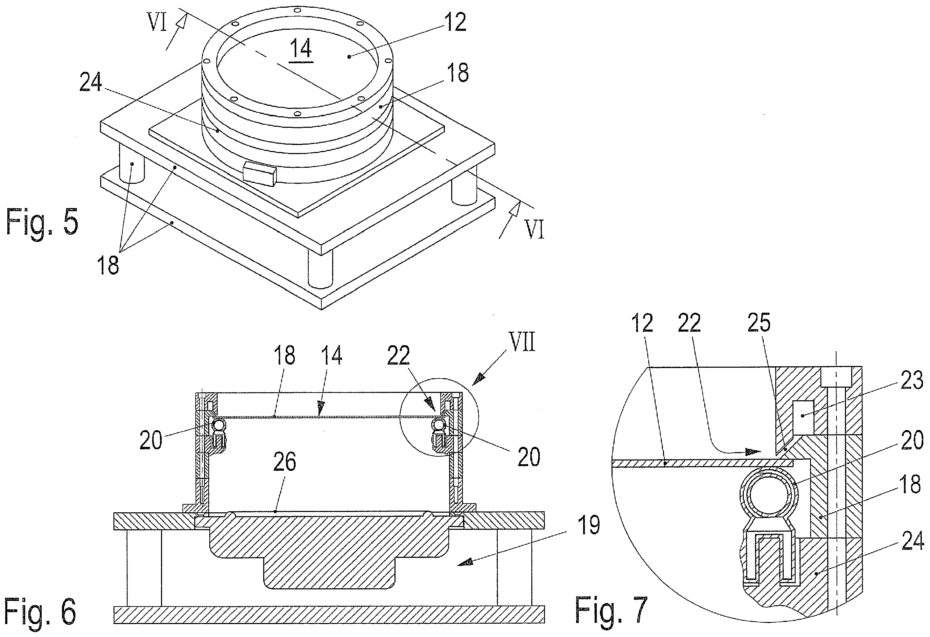

- Figur 5: eine perspektivische Ansicht des ersten Ausführungsbeispiels,
- Figur 6: einen Schnitt entlang der Linie VI - VI in Figur 5,
- Figur 7: das Detail gemäß VII in Figur 6,
- Figur 8: eine perspektivische Ansicht des zweiten Ausführungsbeispiels,
- Figur 9: einen Längsschnitt durch das Ausführungsbeispiel gemäß Figur 8 und
- Figur 10: den Längsschnitt gemäß Figur 9 in einer weiteren Arbeitsposition.

Eine Unterlage 12 bildet an deren Oberseite die Vereinzelungsfläche 14 für die zu vereinzelnden Teile 16. Die Teile 16 werden als Schüttgut der Vereinzelungsfläche 14 zugeführt.

Die Unterlage 12 wird von einem Rahmen 18 getragen, ohne fest mit diesem verbunden zu sein. Vielmehr ist die Unterlage 12 gegenüber dem Rahmen 18 vertikal bewegbar, wobei die Unterlage 12 seitlich von dem Rahmen 18 begrenzt wird. Eine Auflage 20 aus einem flexiblen Gummimaterial federt Bewegungen der Unterlage 12 ab, um zu verhindern, dass Vibrationen der Unterlage 12 auf den Rahmen 18 übertragen werden. Alternativ ist auch eine Variante denkbar, bei der die Unterlage 12 fest eingespannt ist.

Die Unterlage 12 ist in den Ausführungsbeispielen als runde Scheibe ausgebildet, die in deren Randbereich mit einem umlaufenden Kragen 21 versehen ist, der die zu vereinzelnden Teile 16 nach außen begrenzt.

Eine Blasvorrichtung 22 ist dazu ausgebildet, über den Kragen 21 hinweg einen Luftstrom zu erzeugen, der von dem äußeren Rand der Unterlage 12 radial nach innen in Richtung deren Mittelpunkt gerichtet ist, um Teile 16 auf der Vereinzelungsfläche 14 radial von außen nach innen zu bewegen. Die Blasvorrichtung 22 wird durch einen um die Unterlage 12 vollständig umlaufenden Blasluftkanal 23 und einen Ringspalt 25, durch welchen die Blasluft aus dem Kanal 23 auf die Oberfläche der Unterlage 12 strömt, gebildet.

Der Rahmen 18 ist unterhalb der Unterlage 12 mit einer zylindrisch umlaufenden Wand 24 versehen, um die Schallwellen unterhalb der Unterlage 12 zu verstärken.

Die Schallwellen werden von einer Schallmembran 26 unterhalb der Unterlage 12 erzeugt. Die Schallmembran 26 ist Teil einer Schallerzeugungsvorrichtung 19 in Form eines herkömmlichen Lautsprechers. Durch Anlegen einer elektrischen Spannung wird die Schallmembran 26 in Schwingung versetzt, um dadurch die Schallwellen zu erzeugen. Die Schallwellen breiten sich in Richtung auf die Unterlage 12 aus und regen diese zu einer Vibration an, die darauf liegende Teile 16 springen lässt.

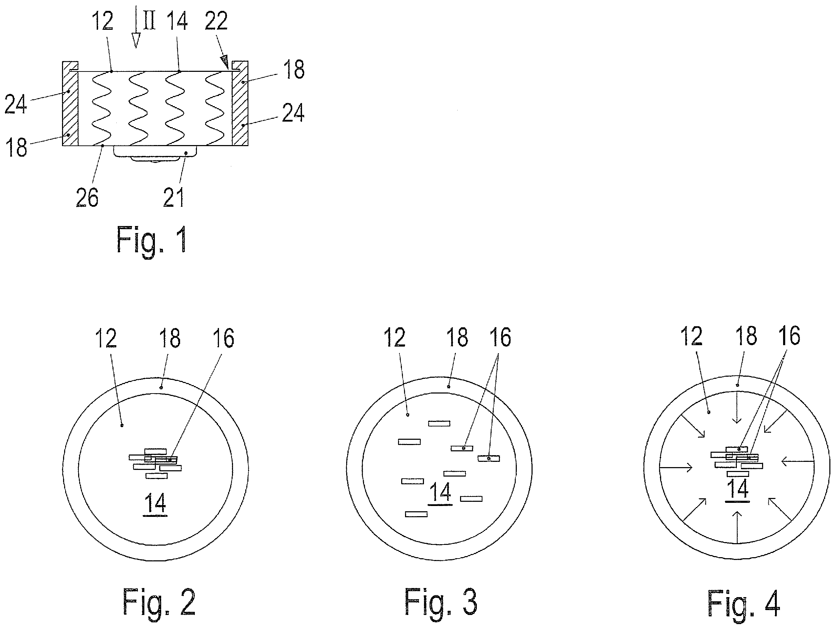

Figur 2 zeigt eine Draufsicht auf die Vereinzelungsvorrichtung des ersten Ausführungsbeispiels (Einzelsystem) vor der Teilevereinzelung. Figur 3 zeigt dieselbe Draufsicht nach erfolgter Vereinzelung durch Schallwellenanregung der Unterlage 12. Figur 4 zeigt dieselbe Draufsicht nach der Vereinzelung gemäß Figur 3 und nachdem die Teile 16 mit Hilfe der Blasvorrichtung 22 radial von außen nach innen in Richtung des Mittelpunkts der Unterlage 12 bewegt wurden. Bei dem ersten Ausführungsbeispiel handelt es sich um ein Einzelsystem mit nur einer Unterlage 12, die nicht gegenüber dem Rahmen 18 verfahrbar ausgebildet ist.

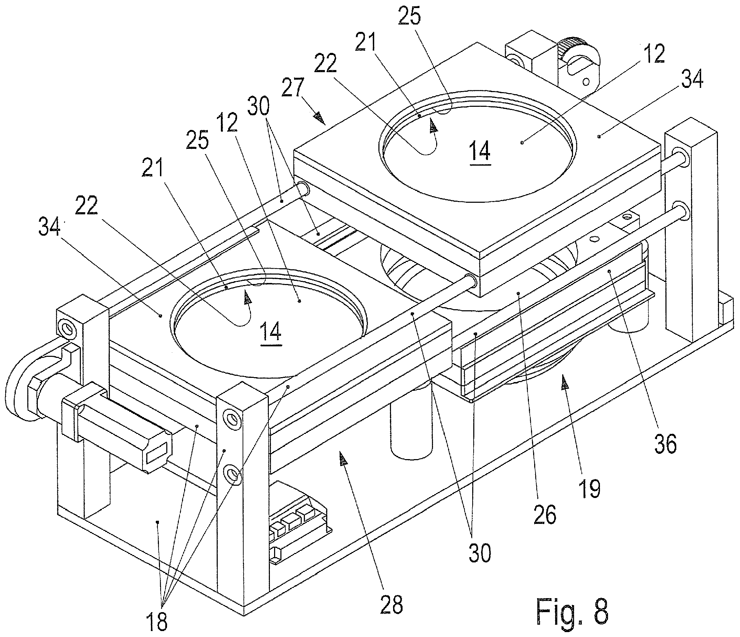

Bei dem Ausführungsbeispiel in den Figuren 8 - 10 sind zwei Unterlagen 12 vorgesehen (Doppelsystem). Jede Unterlage 12 ist auf einem Schlitten 27, 28 angeordnet. Die beiden Schlitten 27, 28 sind auf Schienen 30 horizontal jeweils von einer Entladeposition in eine Vereinzelungs- und Beladeposition oberhalb der Schallmembran 26 verfahrbar. Dabei bewegen sich die Schlitten 27, 28 abwechselnd derart, dass der eine Schlitten automatisch die Vereinzelungsposition oberhalb der Schallmembran 26 erreicht, wenn der andere Schlitten 28 die Entladeposition zum Entladen der vereinzelten Teilen 16 erreicht.

Die Schallerzeugungsvorrichtung 19 mit der Schallmembran 26 ist dabei auf Hubkolben 32 höhenverfahrbar ausgebildet, um sich von unten an den jeweiligen Schlitten 27, 28 in der Vereinzelungsposition anzunähern.

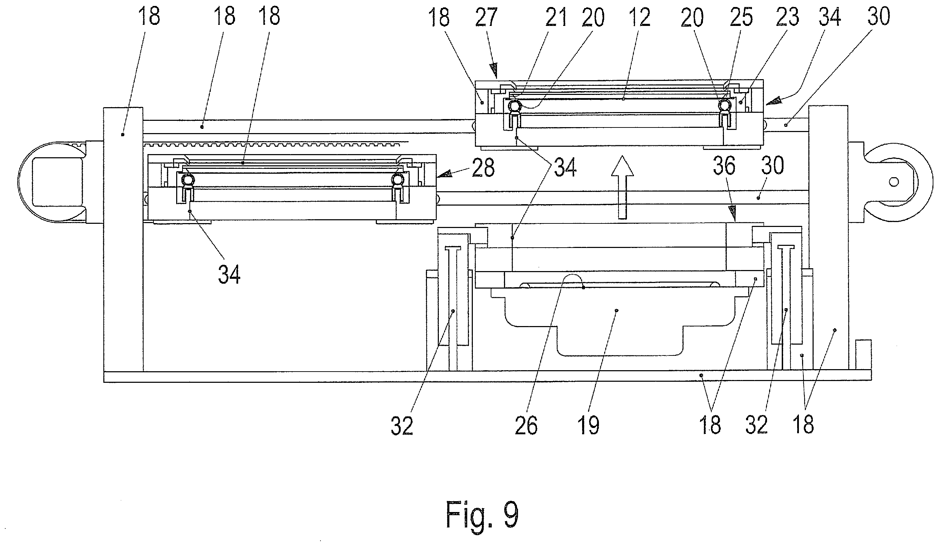

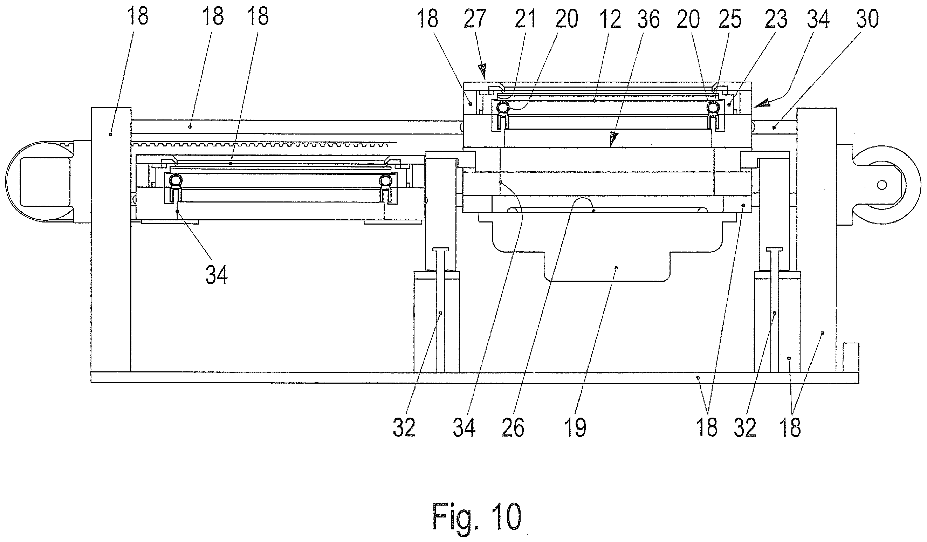

Es ist denkbar, dass die Schallmembran 26 allgemein Teil eines unteren Gehäuseabschnittes 34 ist, welches zusammen mit einem die Unterlage 12 tragenden oberen Gehäuseabschnitt 36 einen Resonanzkörper bildet. Der untere Gehäuseabschnitt 34 kann höhenverfahrbar in Richtung des Pfeils in Figur 9 von unten gegen den oberen Gehäuseabschnitt 36 gefahren werden. Figur 9 zeigt den unteren Gehäuseabschnitt 34 und die Schallerzeugungsvorrichtung 19 in deren unterer Position. Figur 10 zeigt den unteren Gehäuseabschnitt 34 und die Schallerzeugungsvorrichtung 19 in deren oberer Position. Die Wände 24 der beiden Gehäuseabschnitte 34, 36 bilden in dieser Position zusammen mit der Unterlage 12 und der Schallmembran 26 einen Resonanzkörper.

Die Schallmembran muss jedoch nicht luftdicht mit dem Resonanzraum oder der Unterlage 12 verbunden sein. Es ist jedoch denkbar, dass der Resonanzraum zwischen der Schallmembran 26 und der Unterlage 12 mit einem bestimmten Schallübertragungsmedium gefüllt ist. Dabei kann es sich um Luft, um ionisierte Luft, um ein bestimmtes Gas, um Öl oder um ein andersartiges Schallübertragungsmedium handeln.

In den Figuren nicht dargestellte Aufnahmen in der Unterlage 12 können die zu vereinzelnden Teile 16 auffangen und aufnehmen. Die Aufnahmen können aus Löchern oder Bohrungen in der Oberfläche der Unterlage 12 bestehen. Die Aufnahmen sollten eine Form aufweisen, die zumindest zu einem Bereich eines Teils 16 komplementär ist.

## Patentansprüche

1. Verfahren zur Vereinzelung von Teilen (16) in einem Fertigungsprozess, wobei die Teile (16) auf einer von einer Unterlage (12) gebildeten Vereinzelungsfläche (14) liegen und eine mechanisch von der Unterlage (12) entkoppelte Schallerzeugungsvorrichtung (19) zur Erzeugung von Schallwellen vorgesehen ist, wobei die Teile (16) dadurch bewegt werden, dass eine von der Schallerzeugungsvorrichtung (19) ausgesendete Schallwelle zumindest einen Teil der Vereinzelungsfläche (14) zu einer Bewegung anregt.

2. Verfahren nach Anspruch 1, **dadurch gekennzeichnet, dass** mehrere Unterlagen (12) jeweils von einer Vereinzelungsposition oberhalb der Schallmembran (26) in eine Entladeposition zum Entnehmen der vereinzelten Teile (16) von der Unterlage verfahren werden.

3. Verfahren nach Anspruch 1 oder 2, **dadurch gekennzeichnet, dass** die Schallmembran (26) vertikal in Richtung der Unterlage (12) verfahren wird, um die Schallübertragung von der Schallmembran auf die Unterlage zu verbessern.

4. Verfahren nach einem der vorhergehenden Ansprüche, **dadurch gekennzeichnet, dass** zu vereinzelnde Teile (16) aus dem Randbereich der Unterlage (12) durch Gasdruckstöße einer Blasvorrichtung (22) in Richtung des Mittelpunkts der Vereinzelungsfläche (14) bewegt werden.

5. Verfahren nach einem der vorhergehenden Ansprüche, **dadurch gekennzeichnet, dass** das Beladen und das Vereinzeln der Teile zeitlich entkoppelt von dem Entnehmen der Teile von der Unterlage (12) erfolgt.

6. Verfahren nach einem der vorhergehenden Ansprüche, **dadurch gekennzeichnet, dass** die Teile jeweils in Aufnahmen in der Unterlage (12) im Bereich der Vereinzelungsfläche (14) hinein vereinzelt werden.

## Claims

1. A method for separating parts (16) during a manufacturing process, wherein said parts (16) rest on a separating surface (14) constituted by a support (12) and a sound generating apparatus (19) for generating sound waves and mechanically decoupled from the support (12) is provided, wherein said parts (16) are moved by a sound wave emitted by said sound generating apparatus (19) exciting at least a portion of said separating surface (14) such that it moves.

2. The method according to claim 1, **characterized in that** a plurality of supports (12) are respectively displaced from a separating position above the acoustic diaphragm (26) into an unloading position for removing the separated parts (16) from said support.

3. The method according to claim 1 or 2, **characterized in that** the acoustic diaphragm (26) is vertically displaced towards the support (12) to improve the sound transmission from said acoustic diaphragm to said support.

4. The method according to any one of the preceding claims, **characterized in that** the parts (16) to be separated are moved by gas pressure surges of a blowing apparatus (22) from the marginal area of the support (12) towards the center of the separating surface (14).

5. The method according to any one of the preceding claims, **characterized in that** loading and separating of the parts are carried out in a time-shifted manner relative to removing of said parts from the support (12).

6. The method according to any one of the preceding claims, **characterized in that** the parts are each separated into receiving means in the support (12) in the area of the separating surface (14).

## Revendications

1. Procédé de séparation de pièces (16) dans un processus de fabrication, les pièces (16) étant situées sur une surface de séparation (14) formée d'une base (12) et un dispositif générateur de son (19) découplé mécaniquement de la base (12) étant prévu pour générer des ondes sonores, les pièces (16) étant déplacées du fait qu'une onde sonore émise par le dispositif générateur de son (19) excite au moins une pièce de la surface de séparation (14) pour la déplacer.

2. Procédé selon la revendication 1, **caractérisé en ce qu'**une pluralité de bases (12) sont chacune déplacées d'une position de séparation située au-dessus de la membrane acoustique (26) vers une position de déchargement pour retirer les pièces isolées (16) de la base.

3. Procédé selon la revendication 1 ou 2, **caractérisé en ce que** la membrane acoustique (26) est déplacée verticalement en direction de la base (12) afin d'améliorer la transmission acoustique de la membrane acoustique à la base.

4. Procédé selon l'une des revendications précédentes, **caractérisé en ce que** les parties (16) à séparer sont déplacées de la région de bord de la base (12) par des impulsions de gaz sous pression provenant d'un dispositif de soufflage (22) en direction du centre de la surface de séparation (14).

5. Procédé selon l'une des revendications précédentes, **caractérisé en ce que** le chargement et la séparation des pièces s'effectuent avec découplage temporel du retrait des pièces de la base (12).

6. Procédé selon l'une des revendications précédentes, **caractérisé en ce que** les pièces sont chacune séparées dans des logements ménagés dans la base (12) au niveau de la surface de séparation (14).
